Europäisches Patentamt

European Patent Office

Office européen des brevets

(19)

(11) Numéro de publication : **0 425 368 B1**

# (12) FASCICULE DE BREVET EUROPEEN

(45) Date de publication du fascicule du brevet :
26.05.93 Bulletin 93/21

(51) Int. Cl.⁵ : **F25B 17/08**

(21) Numéro de dépôt : **90402982.4**

(22) Date de dépôt : **23.10.90**

(54) **Dispositifs pour produire du froid et/ou de la chaleur par réaction solide-gaz gérés par caloducs gravitationnels.**

(30) Priorité : **24.10.89 FR 8913913**

(43) Date de publication de la demande :
**02.05.91 Bulletin 91/18**

(45) Mention de la délivrance du brevet :
**26.05.93 Bulletin 93/21**

(84) Etats contractants désignés :
**AT BE CH DE DK ES FR GB IT LI LU NL SE**

(56) Documents cités :
**EP-A- 0 041 244
EP-A- 0 129 473
EP-A- 0 202 662
DE-A- 3 604 909
DE-C- 515 311
DE-C- 549 343
DE-C- 678 942
DE-C- 3 435 630
FR-A- 2 377 589
US-A- 2 044 951
US-A- 2 068 891
US-A- 2 088 276**

(73) Titulaire : **SOCIETE NATIONALE ELF
AQUITAINE
Tour Elf, 2, Place de la Coupole, La Défense 6
F-92400 Courbevoie (FR)**

(72) Inventeur : **Lebrun, Michel
2, rue des Sureaux
F-66000 Perpignan (FR)**
Inventeur : **Mauran, Sylvain
16, rue Nationale
F-66600 Espira de l'Agly (FR)**
Inventeur : **Spinner, Bernard
23, avenue Joffre
F-66200 Corneilla del Vercol (FR)**

(74) Mandataire : **Timoney, Ian Charles Craig
SOCIETE NATIONALE ELF AQUITAINE
Departement Propriété Industrielle Tour Elf
Cedex 45
F-92078 Paris La Défense (FR)**

Jouve, 18, rue Saint-Denis, 75001 PARIS

## Description

La présente invention concerne un dispositif pour produire du froid et/ou de la chaleur par réaction solide-gaz et, plus particulièrement, concerne un climatiseur à pompes à chaleur.

Le dispositif visé par l'invention est fondé sur l'utilisation du système dit "pompe thermochimique", dont les caractéristiques principales sont les suivantes :

- on utilise pour le fonctionnement du système lui-même, l'énergie thermique ; l'énergie électrique n'est éventuellement utilisée que pour la circulation des fluides caloporteurs, ou par son effet Joule
- on utilise, comme "moteur chimique" une réaction réversible entre un solide et un gaz du type :

$$\text{<Solide A> + (G)} \xrightarrow{\phantom{---}1\phantom{---}} \text{<solide B>}$$
$$\xleftarrow{\phantom{---}2\phantom{---}}$$

La réaction est exothermique dans le sens 1, ce qui veut dire que dans ce sens elle produit de la chaleur et endothermique dans le sens 2, c'est-à-dire que dans ce sens elle produit du froid.

Un tel système permet le stockage d'énergie sous forme chimique et présente des domaines d'application variés.

De plus, un tel système permet la production, à partir d'une source de chaleur à la température Ts, de chaleur à la température Tu telle que :

$$Tu < Ts$$

Dans ce cas, le système est appelé "pompe à chaleur chimique".

Un tel système permet également la production, à partir d'une source de chaleur à la température T's, de chaleur à la température T'u telle que :

$$T'u > T's$$

Dans ce cas, le système est appelé "thermo transformateur chimique".

Grâce a ce système, il est possible de produire de l'énergie frigorifique à partir d'une source de chaleur et de produire simultanément, à partir d'une source de chaleur à la température T''s, de la chaleur à la température T''u (T''u < T''s) et de l'énergie frigorifique.

Suivant les cas, l'utilisation de la chaleur ou du froid produit est simultanée à la consommation d'énergie à haute température (Ts, T's, T''s) ou différée dans le temps (effet de stockage).

On connaît de la demande de brevet français n° 87 07210 un dispositif pour produire du froid et/ou de la chaleur de manière continue qui comprend deux réacteurs contenant le même composé solide, un condenseur et un évaporateur.

Malgré ses avantages, ce dispositif est d'une efficacité limitée et nécessite un nombre élevé de composants et de dispositifs d'actionnement.

Le document EP-A-41244 décrit un système de chauffage de bâtiment qui comprend deux chambres similaires qui sont reliées par un conduit muni d'une pompe. Une chambre est destinée à contenir une hydrure métallique, l'autre un métal susceptible de réagir pour former une hydrure.

La présente invention a donc pour but de fournir un dispositif pour produire du froid et/ou de la chaleur tel qu'un climatiseur qui est d'une eficacité améliorée et qui nécessite un nombre minimum de dispositifs d'actionnement.

L'invention vise un dispositif pour produire du froid et/ou de la chaleur par réaction solide-gaz comprenant des chambres de réacteur, le dispositif pour produire du froid et/ou de la chaleur par réaction solide-gaz comprend des chambres de réacteur, chaque chambre contenant un réactif susceptible de réagir par absorption avec un gaz selon une réaction exothermique, au moins deux des chambres de réacteur étant reliées ensemble par un passage de gaz, le dispositif comprenant, de plus, un passage pour un fluide à refroidir et un passage pour un fluide à chauffer, caractérisé en ce que le réactif est formé d'un mélange d'un sel et d'un produit expansé bon conducteur thermique, et en ce qu'un caloduc du type gravitationnel assure un transfert de chaleur entre deux chambres de réacteur, les réactifs étant tels que le sel dans l'une des deux chambres de réacteur permet d'effectuer une absorption à un niveau de température supérieur à celui nécessaire pour effectuer la désorption dans l'autre des deux chambres de réacteur.

Les avantages, ainsi que le fonctionnement de la présente invention apparaîtront plus clairement à la lecture de la description suivante faite d'une manière non limitative en référence aux dessins annexés sur lesquels :

- la figure 1 est une vue en coupe schématique d'un climatiseur à pompes à chaleur selon l'invention ; et
- les figures 2 et 3 sont des diagrammes de Clapeyron représentant deux étapes de fonctionnement du climatiseur de la figure 1 ;
- la figure 4 est une vue en coupe schématique d'un climatiseur selon un deuxième mode de réalisation de l'invention ;
- la figure 5 est une vue en coupe schématique d'un climatiseur selon un troisième mode de réalisation de l'invention ; et
- la figure 6 est un diagramme de Clapeyron représentant une étape de fonctionnement du climatiseur de la figure 5.

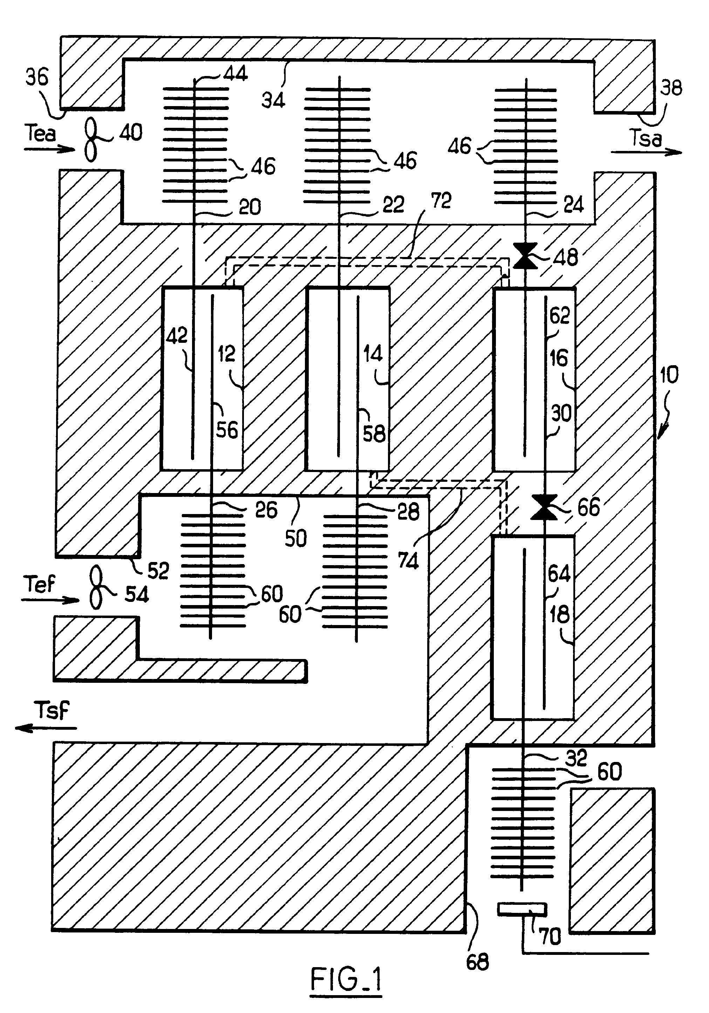

Sur la figure 1 est représenté un climatiseur à pompes à chaleur qui, dans l'exemple illustré, est destiné à refroidir une circulation d'air dans un local de 13° à 7°C. Le climatiseur comprend un corps 10 formé dans un matériau ayant des propriétés d'isolant thermique et dans lequel sont définies quatre chambres de réacteur 12, 14, 16 et 18. Chaque chambre de réacteur est remplie d'un sel comme il sera décrit plus en détail ci-dessous.

Afin de permettre le passage de chaleur entre les réacteurs 12, 14, 16 et 18 et l'air, le climatiseur comprend des dispositifs de transfert de chaleur qui sont des caloducs dits "gravitationnels". De façon connue, un caloduc gravitationnel comprend un tube dont la partie inférieure contient un fluide qui, mis en contact avec une source de chaleur, s'évapore vers la partie supérieure du tube, elle-même mise en contact avec une source de température plus froide, de façon à condenser dans cette partie supérieure la vapeur sous forme de liquide. Ce liquide retourne, par gravité, dans la partie inférieure du caloduc. Un tel caloduc forme un système continu mais nécessite un gradient de température pour fonctionner et, par ailleurs, utilise le phénomène de gravité. Ainsi de tels caloducs sont des diodes thermiques ne fonctionnant que lorsque la température de leur partie inférieure est supérieure à celle de leur partie supérieure. Le présent climatiseur comprend sept caloducs gravitationnels 20, 22, 24, 26, 28, 30 et 32 comme il sera décrit plus en détail ci-après.

Dans la partie supérieure du corps 10 du climatiseur est formé un premier passage d'air 34 comportant deux sections de diamètre réduit 36 et 38. Un ventilateur 40, disposé dans la section 36, est destiné à faire circuler l'air ambiant dans le passage 34 dans le sens des flèches. Un premier caloduc 20 est monté dans le corps 10 de façon que sa partie inférieure 42 se projette dans la chambre de réacteur 12. Sa partie supérieure 44, qui est munie par exemple d'ailettes 46 facilitant le transfert de chaleur, ou tout type d'échangeur à air, fait saillie dans le passage d'air 34. De façon analogue, les caloducs 22 et 24 sont montés entre les chambres de réacteur 14 et 16 et le passage d'air 34. Chacun de ces caloducs 22 et 24 est muni d'ailettes 46, le caloduc 24 comportant, de plus, une vanne de commande 48 destinée à commander le passage de fluide dans le caloduc 24 et, ainsi, sa mise en marche.

Un deuxième passage d'air 50 est formé dans le corps 10 du climatiseur et comporte une section à diamètre réduit 52 dans laquelle est monté un ventilateur 54 destiné à faire circuler l'air à refroidir dans le passage 50 dans le sens des flèches. Les caloducs 26 et 28 sont montés dans le corps 10 du climatiseur de façon que leurs parties supérieures 56, 58 se projettent respectivement dans les chambres de réacteur 12 et 14. La partie inférieure de chaque caloduc 26 et 28 fait saillie dans le passage d'air 50 et comporte des ailettes 60 afin de faciliter le transfert de chaleur entre les caloducs 26, 28 et l'air à refroidir.

Les chambres de réacteurs 16 et 18 sont reliées par le caloduc 30, la partie supérieure 62 de ce dernier faisant saillie dans la chambre de réacteur 16 et la partie inférieure 64 étant reçue dans la chambre de réacteur 18. Tout comme le caloduc 24, le caloduc 30 est muni d'une vanne de commande 66. Ce caloduc 30, comme les parties des caloducs 20, 22, 24 et 32 en contact avec le sel réactif, est muni d'un échangeur adapté aux transferts thermiques avec les milieux solides poreux.

Le corps 10 du climatiseur est muni d'un troisième passage 68 dans lequel est montée une source de chaleur qui, dans l'exemple illustré, est un brûleur de chaudière 70. Le dernier caloduc 32 est monté avec sa partie supérieure dans la chambre de réacteur 18, sa partie inférieure, munie d'ailettes 60, étant reçue dans le passage 68 à côté du brûleur 70. Les chambres de réacteur 12 et 16 sont en communication permanente par l'intermédiaire d'un passage 72. De façon analogue, les chambres de réacteur 14 et 18 communiquent par un passage 74.

Chaque chambre de réacteurs 12 à 18 est remplie d'un réactif associé contenant un sel et qui est choisi afin d'assurer la fonction prédéterminée du climatiseur. Dans le présent exemple où le climatiseur est destiné à refroidir une circulation d'air dans un local de 13° à 7°C, les chambres de réacteur sont remplies comme suit. Dans chaque cas, le réactif est formé d'un mélange d'un sel pulvérulent et d'un produit expansé qui est bon conducteur thermique. De préférence, le produit expansé est du graphique expansé.

Les chambres de réacteur 12 et 14 sont remplies d'un réactif contenant un sel tel que $BaCl_2/NH_3$ qui permet un cyclage absorption-désorption. La chambre de réacteur 16 contient un sel tel que $ZnCl_2/NH_3$ permettant

d'effectuer une absorption à un niveau de température supérieur ou égal à 45°C à la pression imposée par le réacteur 12 en désorption. La chambre de réacteur 18 est remplie d'un réactif contenant un sel par exemple du $NiCl_2/NH_3$ qui permet d'effectuer une absorption à un niveau de température supérieur, d'au moins 30°C, au niveau de température nécessaire pour effectuer la désorption du réacteur 16 au niveau de pression imposé par le réacteur 14 en absorption.

Les caloducs 20 à 32 ont également des caractéristiques particulières qui sont sélectionnées afin d'assurer le fonctionnement du climatiseur dans des conditions données. Dans l'exemple illustré, les caractéristiques sont les suivantes. Les caloducs 20 et 22 sont des caloducs gravitationnels simples ayant une gamme minimale de fonctionnement 20° à 60°C, les contraintes extrêmes étant 20°C, la température minimale de l'air extérieur et 60°C, la température maximale du sel +5°C.

Comme déjà décrit, le caloduc 24 est muni d'une vanne 48, la gamme de fonctionnement est de 20° à 160°C, les contraintes extrêmes étant 20°C, la température minimale de l'air extérieur, et 160°C la temperature maximale du sel +5°C.

De façon analogue, les caractéristiques des caloducs 26 à 32 sont comme suit :

Caloducs 26 et 28 : Caloducs gravitationnels simples
Gamme de fonctionnement : -10°C à 35°C
Contraintes extrêmes : -10°C à 50°C
(-10°C = Température minimale du sel -5°C)
(+35°C = Température maximale du local)
(+50°C = Température maximale du sel +5°C)

Caloduc 30 : Caloduc gravitationnel muni d'une vanne 66
Gamme de fonctionnement : +40°C à 285°C
Contraintes extrêmes : =40°C à 285°C
(+40°C = Température minimale du sel du réacteur 16 -5°C)
(285°C = Température maximale du sel du réacteur 18 +5°C)

Caloduc 32 : Caloduc gravitationnel simple
Gamme de fonctionnement : +100°C à 285°C
Contraintes extrêmes : +100°C à 285°C
(+100°C = Température minimale du sel -5°C)
(+285°C = Température maximale du sel +5°C)

Le fonctionnement des dispositifs selon l'invention est fondé sur la réaction entre un sel et un gaz. Comme il s'agit d'une véritable réaction chimique, on a un système monovariant à l'équilibre, c'est-à-dire qu'il existe une relation univoque entre la température et la pression de la forme log P = a - B/T, expression dans laquelle P est la pression, T la température en °K et A et B sont des constantes caractéristiques du couple sel/gaz utilisé.

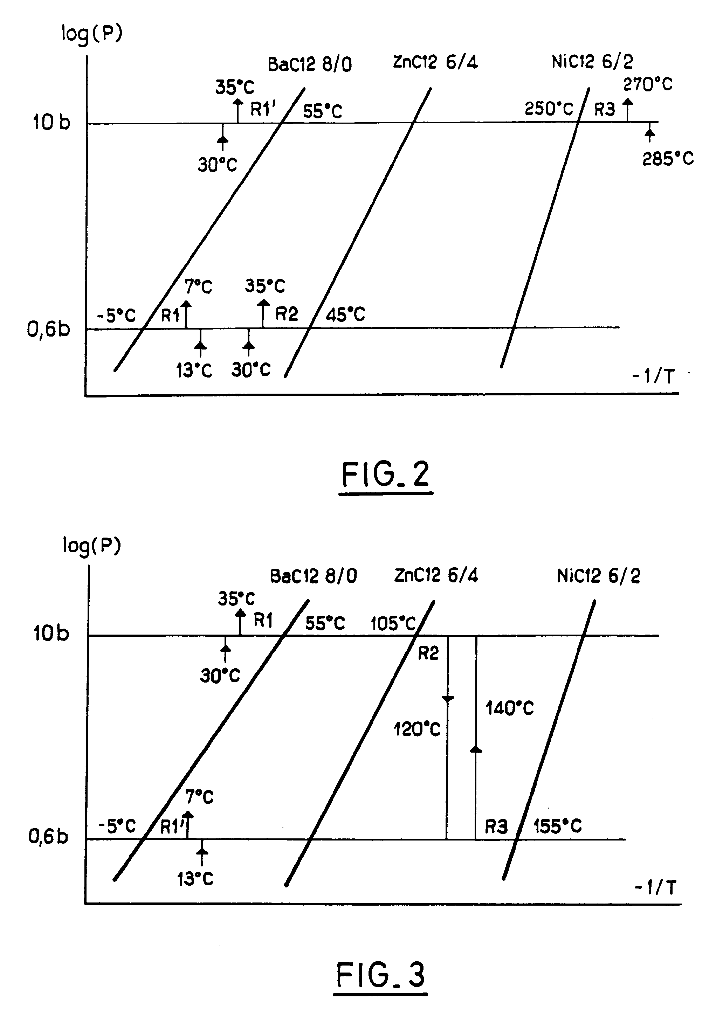

Dans la description suivante, les phases de fonctionnement seront représentées dans des diagrammes de Clapeyron tels qu'indiqués sur les figures 2 et 3 et qui comportent des droites d'équilibre des sels utilisés.

Au démarrage du climatiseur, la température d'entrée d'air du local est de 13°C, celle de l'air extérieur est de 30°C et la température de la chaudière est de 285°C. La vanne 48 est ouverte et la vanne 66 est fermée.

Les réacteurs sont dans les états initiaux suivants :

Réacteur 12 : début de désorption
T = 10°C (écart à l'équilibre 15°C)
Réacteur 16 : début d'absorption
T = 30°C (écart à l'équilibre 15°C)
Réacteur 14 : début d'absorption
T = 40°C (écart à l'équilibre 15°C)
Réacteur 18 : début de désorption
T = 265°C (écart à l'équilibre 15°C)

Dans ces conditions et sachant que les caloducs gravitationnels ne fonctionnent que lorsque la température de leur partie inférieure est supérieure à celle de leur partie supérieure, seuls les caloducs 22, 24, 26 et 32 sont en fonctionnement.

La désorption se produisant dans le réacteur 12 le maintient à une temperature entre -5°C et 5°C. La production de froid est donc assurée par l'intermédiaire du caloduc 26.

L'absorption se produisant dans le réacteur 16 le maintient à une température entre 35°C et 45°C. Le caloduc 24 évacue les calories de cette réaction dans l'air extérieur.

L'absorption se produisant dans le réacteur 14 le maintient à une température entre 35°C et 55°C. Le caloduc 22 évacue les calories de cette réaction dans l'air extérieur.

Le caloduc 32 apporte les calories de la chaudière 70 au réacteur 18 en le maintenant à une température entre 250°C et 285°C, ce qui assure la réaction de désorption de ce dernier.

4

L'ouverture de la vanne 66, la fermeture de la vanne 48 et l'arrêt de la chaudière permettent le passage du climatiseur à l'étape suivante.

La chaudière étant à l'arrêt, la température de cette dernière chute à un niveau inférieur à 100°C. On pourrait envisager l'utilisation d'un troisième ventilateur pour assurer la rapidité de cette descente de température. Le caloduc 32 n'est donc plus en état de fonctionnement, la température de sa partie inférieure étant inférieure à celle de sa partie supérieure.

La vanne 48 étant fermée, le caloduc 24 ne peut fonctionner.

Le réacteur 18 étant a une température supérieure au réacteur 16, le caloduc 30 est en fonctionnement, la vanne 66 étant ouverte. Le caloduc 30 assure donc le passage des calories du réacteur 18 vers le réacteur 16, provoquant le refroidissement du réacteur 18 et le chauffage du réacteur 16.

Le refroidissement du réacteur 18 provoque son passage de condition de désorption à condition d'absorption. Le réacteur 18 est relié au réacteur 14 qui est toujours dans des conditions d'absorption. Les deux réacteurs 14 et 18 se trouvent ainsi en absorption, ce qui provoque une baisse de pression dans l'ensemble des réacteurs 14 et 18 par déficit du gaz absorbé.

Le réacteur 14 va donc bientôt se trouver dans des conditions de désorption et sa température baissera donc par l'effet endothermique de cette désorption. Partant d'une température d'environ 35° à 40°C (fin d'absorption) la température va passer à un niveau inférieur à 30°C. Le caloduc 22 sera alors hors fonction. Descendant encore, la température passera à un niveau inférieur à 13° et le caloduc 28 fonctionnera assurant ainsi la production d'air froid.

Le chauffage du réacteur 16 provoque son passage de condition d'absorption à condition de désorption. Le réacteur 16 est relié au réacteur 12 qui est toujours dans des conditions de désorption. Les deux réacteurs 12 et 16 se trouvent donc en désorption, ce qui provoque une montée de pression dans l'ensemble des réacteurs 12 et 16 par accumulation du gaz désorbé.

Le réacteur 12 va donc bientôt se trouver dans des conditions d'absorption. Sa température augmentera par l'effet exothermique de cette absorption. Partant d'une température d'environ 0°C à 5°C (fin de désorption) la température va passer à un niveau supérieur à 13°C. Le caloduc 26 sera alors hors fonction. Augmentant encore, la température passera au-dessus de 30°C et le caloduc 20 fonctionnera assurant l'évacuation de la chaleur produite par l'absorption dans le réacteur 12.

Le climatiseur passe ainsi à la troisième étape dans laquelle les caloducs 20, 28 et 30 se trouvent en mode opératoire. L'absorption se produisant dans le réacteur 12 le maintient à une température entre 35°C et 55°C. Le caloduc 20 évacue les calories de cette réaction dans l'air extérieur.

La désorption se produisant dans le réacteur 14 le maintient à une température entre -5°C et 5°C. La production de froid est donc assurée par l'intermédiaire du caloduc 28.

Le fonctionnement du caloduc 30 permettant le passage, les calories du réacteur 18 vers le réacteur 16, la désorption se produisant dans le réacteur 16 et l'absorption se produisant dans le réacteur 18 se conjuguent pour maintenir le réacteur 16 à une température entre 105°C et 140°C et le réacteur 18 à une température entre 120°C et 155°C. Ces conditions assurent le fonctionnement du système.

A la fin de cette étape, la fermeture de la vanne 66 et l'ouverture de la vanne 48, ainsi que la mise en marche de la chaudière permettent le passage à l'étape finale.

La vanne 66 étant fermée, le caloduc 30 est hors service et la chaleur ne peut plus passer du réacteur 18 au réacteur 16.

Le réacteur 16 se trouvant à une temperature supérieure à celle de l'air extérieur, l'ouverture de la vanne 48 permet le fonctionnement du caloduc 24, ce qui assure donc le refroidissement du réacteur 16.

Le refroidissement du réacteur 16 provoque son passage de condition de désorption à condition d'absorption. Le réacteur 16 est relié au réacteur 12 qui est toujours dans des conditions d'absorption et les deux réacteurs sont donc tous les deux en absorption. Ceci provoque une baisse de pression dans l'ensemble des réacteurs 12 et 16 par déficit du gaz absorbé.

Le réacteur 12 va donc bientôt se trouver dans des conditions de désorption et sa température baissera par l'effet endothermique de cette désorption. Partant d'une température d'environ 35°C à 40°C (fin d'absorption) la température va passer à un niveau inférieur à 30°C. Le caloduc 20 sera alors hors fonction. Descendant encore, la température passera à un niveau inférieur à 13°C et le caloduc 26 fonctionnera assurant ainsi la production d'air froid.

Le fonctionnement de la chaudière 70 permet le chauffage de la partie inférieure du caloduc 32 à un niveau de température de 285°C. Le réacteur 18 étant à une température d'environ 120°C à 140°C (fin d'absorption), le caloduc 32 est donc en état de fonctionnement, ce qui assure le chauffage du réacteur 18.

Le chauffage du réacteur 18 provoque le passage de condition d'absorption à condition de désorption. Le réacteur 18 étant relié au réacteur 14 qui est toujours dans des conditions de désorption, les deux réacteurs se trouvent donc en condition de désorption. Ceci provoque une montée de pression dans l'ensemble des réacteurs 14 et 18 par accumulation du gaz désorbé.

Le réacteur 14 va donc bientôt se trouver dans des conditions d'absorption dans lesquelles sa température augmentera par l'effet exothermique de cette absorption. Partant d'une température d'environ 0°C à 5°C (fin de désorption) la température va passer à un niveau supérieur à 13°C et le caloduc 28 sera alors hors fonction. Augmentant encore, la température passera au-dessus de 30°C et le caloduc 22 fonctionnera assurant l'évacuation de la chaleur produite par l'absorption dans le réacteur 14.

A partir de cette condition, le cycle d'opération du climatiseur peut reprendre à partir de la première étape.

L'enchaînement des quatre phases qui vient d'être décrit permet donc le fonctionnement du climatiseur en mode continu.

La présente invention permet, donc, de réaliser un climatiseur à pompes à chaleur qui comporte un très faible nombre de dispositifs d'actionnement. Ceux-ci sont réduits à trois, à savoir vannes 48 et 66 et commande marche/arrêt de la chaudière 70.

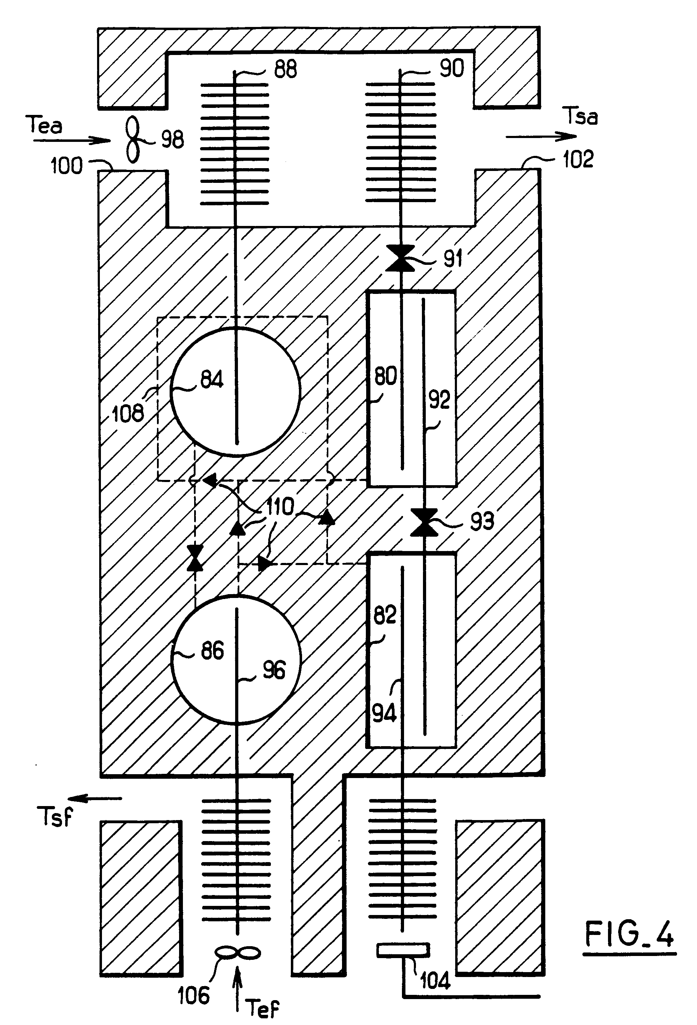

Un deuxième mode de réalisation de climatiseur à pompes à chaleur est représenté sur la figure 4. Ce dispositif diffère de celui décrit ci-avant en ce qu'il comprend deux chambres de réacteur 80, 82, un condenseur 84 et un évaporateur 86. Le dispositif comprend de plus cinq caloducs gravitationnels 88, 90, 92, 94 et 96 analogues à ceux utilisés dans le climatiseur de la figure 1. Comme pour l'autre mode de réalisation, le dispositif de la figure 4 comprend un ventilateur 98 destiné à faire circuler de l'air ambiant entre l'entrée 100 et la sortie 102 dans le sens des flèches, ainsi qu'un brûleur 104 et un deuxième ventilateur 106 destiné à faire circuler l'air à refroidir.

Les caloducs 90 et 92 sont chacun munis d'une vanne de commande 91 et 93 destinée à commander le passage de fluide dans le caloduc et, ainsi, sa mise en marche. Les chambres de réacteur 80, 82, le condenseur 84 et l'évaporateur 86 sont reliés ensemble par un circuit de gaz 108 -représenté par des lignes pointillées- qui comporte quatre clapets anti-retour 110. La chambre de réacteur 80 est remplie d'un réactif contenant un sel permettant d'effectuer une absorption à un niveau de température supérieur ou égal à la température de l'air ambiant. La chambre de réacteur 82 est remplie d'un réactif contenant un sel permettant d'effectuer une absorption à un niveau de température supérieur à celui nécessaire pour effectuer la désorption du réacteur 80.

Le fonctionnement du dispositif est sensiblement analogue à celui du dispositif de la figure 1, le cycle d'opération étant commandé par la mise en marche du brûleur 104 et l'ouverture sélective des vannes 91 et 93. Comme pour le dispositif de la figure 1, l'utilisation des caloducs gravitationnels 88, 90, 92, 94 et 96 permet de réaliser un climatiseur à pompes à chaleur qui comporte un très faible nombre de dispositifs d'actionnement, trois en l'occurence ; les vannes 91 et 93 et la commande marche/arrêt du brûleur 104.

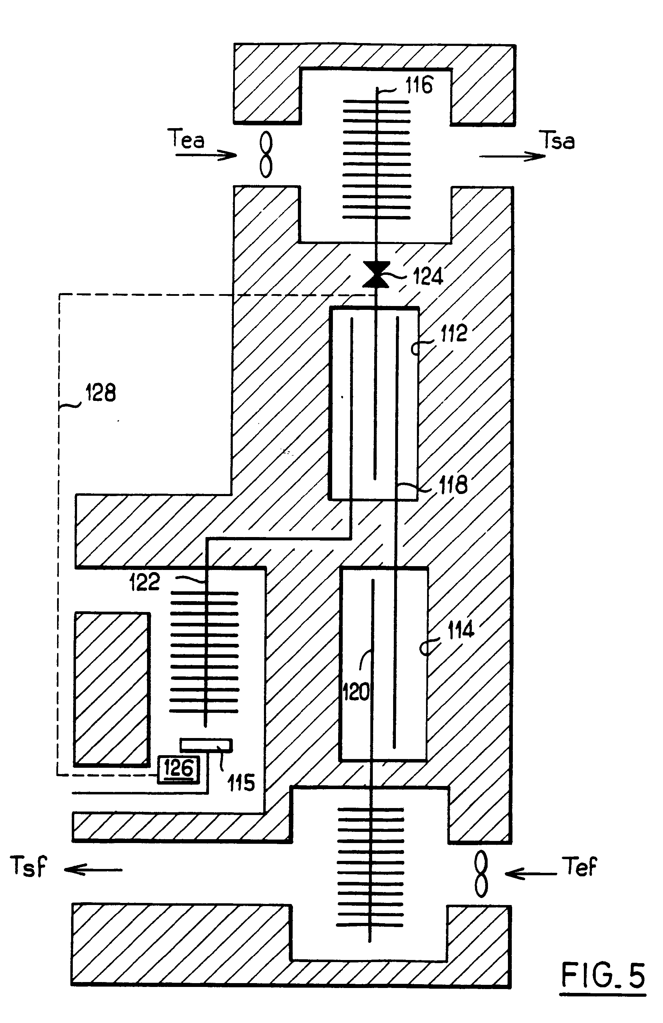

Sur la figure 5 est représenté un troisième mode de réalisation de climatiseur à pompes à chaleur chimiques. Ce dispositif comporte deux chambres de réacteur 112 et 114 et est destiné à produire simultanément, mais de manière discontinue du froid à la température $T_f$ et de chaleur à la température Ta en utilisant la chaleur d'un brûleur 115. On peut prévoir la production en continu en utilisant deux dispositifs analogues fonctionnant en phase opposée. Ce dispositif comporte quatre caloducs gravitationnels 116, 118, 120 et 122 dont seul le caloduc 118 est muni d'une vanne de commande 124.

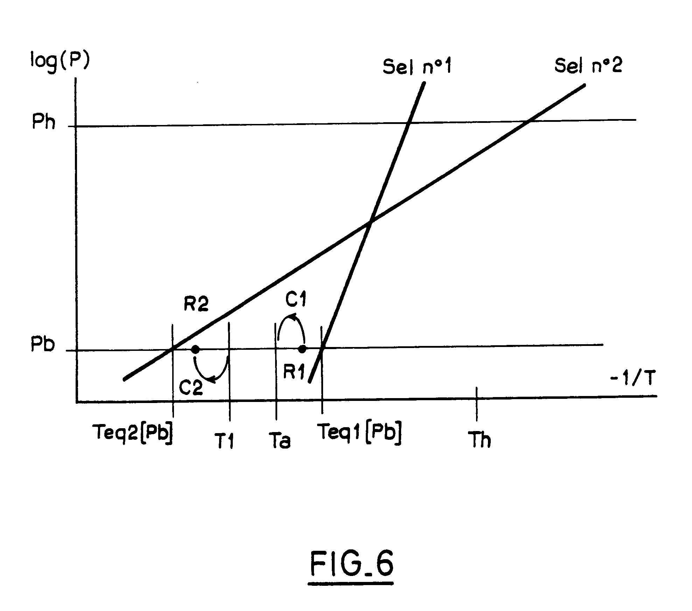

La chambre de réacteur 112 est remplie d'un réactif contenant un sel permettant d'effectuer une absorption à un niveau de température supérieur ou égal à la température Ta de l'air ambiant et à une pression $P_b$, et une désorption à un niveau de température inférieur à la température du brûleur 115 et à une pression $P_h$. La chambre de réacteur 114 contient un réactif contenant un sel permettant d'effectuer une absorption à un niveau de température supérieur à celui nécessaire pour effectuer la désorption du réacteur 112 à la pression $P_h$, et une désorption à une température inférieure à $T_f$ et à la pression $P_b$. Comme représenté sur la figure 6, les sels ayant ces caractéristiques décrites ont des droites d'équilibre qui se croisent dans l'intervalle en question.

Comme pour les dispositifs précédents, l'utilisation des caloducs gravitationnels permet de réaliser un climatiseur ayant un très faible nombre de dispositifs d'actionnement.

Dans les trois modes de réalisation de l'invention décrits ci-avant, la commande de la mise en oeuvre des caloducs gravitationnels a été décrite comme étant effectuée par des vannes de commande. Cependant, on peut commander le fonctionnement d'un caloduc gravitationnel, sans commande mécanique, en utilisant les propriétés d'un gaz inerte tel que le néon qui, lors de son introduction dans un caloduc, en empêche le fonctionnement. Ainsi, il suffit de prévoir un réservoir de gaz inerte qui contient un matériau pouvant absorber ou désorber le gaz en fonction de la température du matériau. Un tel matériau peut être par exemple une zéolithe.

A titre d'exemple, ce type de système de commande est représenté sur la figure 5 mais il peut s'adapter aux dispositifs des figures 1 et 4. Un réservoir 126 est disposé à côté du brûleur 115 et relié au caloduc 116 par un passage 128. A température ambiante, le matériau dans le réservoir 126 absorbe le gaz inerte et permet au caloduc de fonctionner. Lors de la mise en marche du brûleur 115, la température du matériau augmente et le gaz inerte est désorbé et passe dans l'intérieur du caloduc 116. La pression du gaz empêche le fonctionnement du caloduc arrêtant ainsi le transfert de chaleur. Ainsi, la commande marche/arrêt du brûleur contrôle à elle seule le fonctionnement du climatiseur.

En ce qui concerne les dispositifs des figures 1 et 4, on peut également remplacer les deux vannes de commandes 48 et 66, et 91 et 93 par un système à gaz inerte. Les caloducs 24 et 90 sont commandés a partir du brûleur comme c'était le cas pour le dispositif de la figure 5. En ce qui concerne les caloducs 30 et 92, ceux-ci sont commandés par un réservoir de gaz inerte qui contient une résistance électrique qui est alimentée pendant la phase d'arrêt du brûleur. Le fonctionnement des caloducs 30 et 92 est ainsi empêché pendant l'arrêt du brûleur. Avec un tel système, le nombre de dispositifs de commande est encore réduit.

L'emploi des caloducs permet de réduire les irréversibilités des transferts thermiques dus aux habituels pincements qui sont nécessaires au fonctionnement des échangeurs classiques.

De plus, avec le climatiseur selon la présente invention, la modulation de la production de froid peut être réalisée à faible coût par l'emploi de deux vannes de régulation du débit de gaz, situées respectivement dans chacun des passages 72 et 74, pour le dispositif de la figure 1, ou en entrée de l'évaporateur et en sortie du condenseur pour la dispositif de la figure 4.

Dans le cas où le dispositif est destiné à assurer la climatisation d'un véhicule à moteur à explosion, la chaudière peut avantageusement être remplacée par un système de récupération de chaleur des gaz d'échappement.

## Revendications

1. Dispositif pour produire du froid et/ou de la chaleur par réaction solide-gaz comprenant des chambres de réacteur (12, 14, 16, 18 ; 80, 82 ; 112, 114), chaque chambre contenant un réactif susceptible de réagir par absorption avec un gaz selon une réaction exothermique, au moins deux des chambres de réacteur étant reliées ensemble par un passage de gaz (72, 74 ; 108), le dispositif comprenant, de plus, un passage pour un fluide à refroidir et un passage pour un fluide à chauffer, caractérisé en ce que le réactif est formé d'un mélange d'un sel et d'un produit expansé bon conducteur thermique, et en ce qu'un caloduc du type gravitationnel assure un transfert de chaleur entre deux chambres de réacteur (16, 18 ; 80, 82 ; 112, 114), les réactifs étant tels que le sel dans l'une des deux chambres de réacteur (16, 18 ; 80, 82 ; 112, 114) permet d'effectuer une absorption à un niveau de température supérieur à celui nécessaire pour effectuer la désorption dans l'autre des deux chambres de réacteur.

2. Dispositif selon la revendication 1 caractérisé en ce qu'il comprend quatre chambres de réacteur (12, 14, 16, 18) reliées ensemble par paire (12,16 ; 14,18), par des passages associés (72, 74), le transfert de chaleur entre chaque chambre de réacteur et une source externe étant assuré par un caloduc gravitationnel.

3. Dispositif selon la revendication 1 caractérisé en ce qu'il comprend deux chambres de réacteur (80, 82), un condenseur (84) et un évaporateur (86) pour le gaz, le transfert de chaleur entre les chambres de réacteur (80, 82) et entre les chambres de réacteur, le condenseur, l'évaporateur et des sources externes étant assuré par des caloducs gravitationnels (88-96).

4. Dispositif selon la revendication 1, caractérisé en ce qu'il comprend deux chambres de réacteur (112 ; 114), le transfert de chaleur entre les chambres de réacteur, et entre les chambres de réacteur et des sources externes étant assuré par des caloducs gravitationnels.

5. Dispositif selon la revendication 2, caractérisé en ce qu'il comprend sept caloducs gravitationnels (20-32) dont seulement deux (24, 30) comportent une vanne de commande (48 ; 66) associée destinée à commander le fonctionnement du dispositif et sont disposés l'un (30) entre deux chambres de réacteur (16 ; 18) et l'autre entre l'une des deux chambres (16) et l'air ambiant.

6. Dispositif selon la revendication 3 caractérisé en ce qu'il comprend cinq caloducs gravitationnels (88-96) dont seulement deux (90 ; 92) comportent une vanne de commande (91 ; 93) associée et sont disposés, l'un (92) entre deux chambres de réacteur (80, 82) et l'autre entre l'une des deux chambres (80) et l'air ambiant.

7. Dispositif selon l'une des revendications 2 à 4, caractérisé en ce qu'il comprend un dispositif (126, 128) destiné à rendre inopérant un caloduc gravitationnel associé, le dispositif (126, 128) comprenant un réservoir (126) qui est susceptible d'absorber ou désorber un gaz inerte en fonction de la température du réservoir, le réservoir étant relié au caloduc gravitationnel.

**Patentansprüche**

1.  Vorrichtung zur Erzeugung von Kälte und/oder Wärme durch eine Reaktion Feststoff-Gas mit Reaktorkammern (12, 14, 16, 18;80, 82; 112, 114), wobei jede Kammer ein Reagens enthält, das durch Absorption mit einem Gas gemäß einer exothermen Reaktion reagieren kann, wenigstens zwei der Reaktorkammern miteinander durch einen Gaskanal 72, 74; 108) verbunden sind und die Vorrichtung ferner einen Kanal für ein zu kühlendes Fluid und einen Kanal für ein zu erwärmendes Fluid aufweist, dadurch **gekennzeichnet,** daß das Reagens von einer Mischung eines Salzes und eines gut wärmeleitenden Schaumstoffs gebildet wird und daß ein Schwerkraftwärmerohr einen Wärmeübergang zwischen zwei Reaktorkammern (16, 18; 80, 82; 112, 114) gewährleistet, wobei die Reagenzien so beschaffen sind, daß das Salz in einer der beiden Reaktorkanmmern (16, 18; 80, 82; 112, 114) ermöglicht, daß eine Absorption auf einem Temperaturniveau bewirkt wird, das größer ist als das, welches zur Bewirkung der Desorption in der anderen der beiden Reaktorkammern erforderlich ist.

2.  Vorrichtung nach Anspruch 1, dadurch **gekennzeichnet,** daß sie vier Reaktorkammern (12, 14, 16, 18) umfaßt, die paarweise (12, 16; 14, 18) miteinander durch zugeordnete Känäle (72, 74) verbunden sind, wobei der Wärmeübergang zwischen jeder Reaktorkammer und einer externen Quelle nur durch ein Schwerkraft-Wärmerohr gewährleistet ist.

3.  Vorrichtung nach Anspruch 1, dadurch **gekennzeichnet,** daß sie zwei Reaktorkammern (80, 82), einen Kondensator (84) und einen Verdampfer (86) für das Gas aufweist, wobei der Wärmeübergang zwischen den Reaktorkammern (80, 82) und zwischen den Reaktorkammern, dem Kondensator, dem Verdampfer und den externen Quellen durch Schwerkraft-Wärmerohre (88-96) gewährleistet ist.

4.  Vorrichtung nach Anspruch 1, dadurch **gekennzeichnet,** daß sie zwei Reaktorkammern (112; 114) aufweist, wobei der Wärmeübergang zwischen den Reaktorkammern und zwischen den Reaktorkammern und den externen Quellen durch Schwerkraft-Wärmerohre gewährleistet ist.

5.  Vorrichtung nach Anspruch 2, dadurch **gekennzeichnet,** daß sie sieben Schwerkraft-Wärmerohre (20-32) aufweist, von denen nur zwei (24, 30) ein zugeordnetes Steuerventil (48; 66) aufweisen, das zum Steuern der Funktion der Vorrichtung bestimmt ist, und von denen das eine (30) zwischen zwei Reaktorkammern (16; 18) und das andere zwischen einer (16) der beiden Kammern und der Umgebungsluft angeordnet sind.

6.  Vorrichtung nach Anspruch 3, dadurch **gekennzeichnet,** daß sie fünf Schwerkraft-Wärmerohre (88-96) aufweist, von denen nur zwei (90; 92) ein zugeordnetes Steuerventil (91; 93) aufweisen und von denen das eine (92) zwischen zwei Reaktorkammern (80, 82) und das andere zwischen einer (80) der beiden Kammern und der Umgebungsluft angeordnet sind.

7.  Vorrichtung nach einem der Ansprüche 2 bis 4, dadurch **gekennzeichnet,** daß sie eine Einrichtung (126, 128) aufweist, die dazu bestimmt ist, ein zugehöriges Schwerkraft-Wärmerohr wirkungslos zu machen, wobei die Einrichtung (126, 128) einen Speicher (126) aufweist, der ein Inertgas als Funktion der Temperatur des Speichers absorbieren oder desorbieren kann, und der Speicher mit dem Schwerkraft-Wärmerohr verbunden ist.

**Claims**

1.  Device for producing cold and/ or heat by solid / gas reaction, comprising reactor chambers (12, 14, 16, 18; 80, 82; 112, 114) each of which contains a reagent which can react by absorption with a gas in accordance with an exothermic reaction, at least two of the reactor chambers being connected to one another by a gas passage (72, 74; 108), the device additionally comprising a passage for a coolant fluid and a passage for a heating fluid, characterised in that the reagent consists of a mixture of a salt and an expanded product which conducts heat well, and in that a gravitational-type heat conductor transfers heat between two reactor chambers (16, 18; 87, 82; 112, 114), the reagents being such that the salt in one of the two reactor chambers (16, 18; 80, 82; 112, 114) enables absorption to occur at a temperature higher than that necessary in order to carry out desorption in the other reactor chamber.

2. Device according to Claim 1, characterised in that it comprises four reactor chambers (12, 14, 16, 18) connected in pairs (12, 16; 14, 18) by means of associated passages (72, 74), heat being transferred between each reactor chamber and an external source by means of a gravitational heat conductor.

3. Device according to Claim 1, characterised in that it comprises two reactor chambers (80, 82), a condenser (84) and an evaporator (86) for the gas, heat being transferred between the reactor chambers (80, 82) and between the reactor chambers, the condenser, the evaporator and the external sources by means of gravitational heat conductors (88-96).

4. Device according to Claim 1, characterised in that it comprises two reactor chambers (112; 114), heat being transferred between the reactor chambers and between the reactor chambers and the external sources by means of gravitational heat conductors.

5. Device according to Claim 2, characterised in that it comprises seven gravitational heat conductors (20 - 32), of which only two (24, 30) have an associated control valve (48; 66) for controlling the operation of the device, and of which one (30) is disposed between two reactor chambers (16; 18), and the other of which is disposed between one of the two chambers (16) and the ambient air.

6. Device according to Claim 3, characterised in that it comprises five gravitational heat conductors (88 - 96), of which only two (90; 92) have an associated control valve (91; 93), and of which one (30) is disposed between two reactor chambers (80, 82), and the other is disposed between one of the two chambers (80) and the ambient air.

7. Device according to any one of Claims 2 to 4, characterised in that it comprises a device (126,128) for preventing an associated gravitational heat conductor from functioning, the device (126, 128) comprising a tank (126) which can absorb or desorb an inert gas in accordance with the temperature of the tank, the tank being connected to the gravitational heat conductor.

FIG_1

EP 0 425 368 B1

FIG. 2

FIG. 3

11

FIG_4

FIG. 5

FIG.6